# EUROPEAN PATENT SPECIFICATION

(11) **EP 3 236 026 B1**
(45) Date of publication and mention of the grant of the patent: **06.05.2020**
(21) Application number: 16180954.6
(22) Date of filing: 25.07.2016
(51) Int. Cl.: F01L 1/047, F02F 1/24, F01L 1/46, F01L 1/053

(54) **CAM CARRIER MODULE FOR VEHICLES**
NOCKENTRÄGERMODUL FÜR FAHRZEUGE
MODULE DE SUPPORT DE CAME POUR VÉHICULES

(30) Priority: 21.04.2016 KR 20160048529
(43) Date of publication of application: 25.10.2017
(73) Proprietor: Hyundai Motor Company, Seoul 137-938 (KR); Kia Motors Corporation, Seoul 137-938 (KR)
(72) Inventor: YOON, Seok Jun, 14102 Anyang-si, Gyeonggi-do (KR); CHEONG, In Cheol, 14232 Gwangmyeong-si, Gyeonggi-do (KR); PARK, Yoong Hwa, 13597 Seongnam-si, Gyeonggi-do (KR); RYU, Hyun Wook, 18279 Hwaseong-si, Gyeonggi-do (KR); PARK, Byung Ok, 18271 Hwaseong-si, Gyeonggi-do (KR); KOH, Won Hyuk, 05555 Seoul (KR)
(74) Representative: Viering, Jentschura & Partner mbB Patent- und Rechtsanwälte

(56) References cited:
- EP-A1- 2 489 865
- DE-A1- 19 831 772
- DE-A1-102005 028 332
- DE-U1-202015 106 690
- JP-A- H07 102 929
- KR-B1- 101 611 085
- US-A- 4 944 263
- US-A1- 2011 079 192

## Description

### BACKGROUND OF THE INVENTION

### Field of the Invention

The present invention relates to a cam carrier module for a vehicle that prevents deformation of a journal portion by improving the structure of assembly of a cam carrier and a cylinder head and improves sealing ability by improving a sealing structure.

### Description of the Related Art

A pair of intake camshaft and exhaust camshaft are provided in the cylinder head of an engine and operated with a crankshaft by a chain or a belt. Cams having different phase angles for respective cylinders may be formed on the camshafts, so intake valves and exhaust valves can be opened and closed according to a predetermined cycle.

The camshafts are mounted over the cylinder head and camshaft journal portions for supporting the camshafts may be formed directly on the cylinder head or on a cam carrier that is a separate part mounted on the cylinder head by bolts.

An engine in which fuel is directly injected into a cylinder may be provided with an injector disposed through the cam carrier and the cylinder head.

In the type of a cam carrier that is mounted over a cylinder head, poor rotation of a camshaft may be caused by deformation of a bore of a journal portion when the cam carrier is bolted to the cylinder head.

That is, bolts are tightened around a journal portion formed on a cam carrier to fasten the cam carrier to a cylinder head in the related art, but the journal portion is pressed by the force for tightening the bolts, so the bore of the journal portion is deformed. Accordingly, the oil gap between the camshaft and the inner side of the bore is greatly decreased and poor rotation of the camshaft results, thereby increasing possibility of seizure of the camshaft.

The description provided above as a related art of the present invention is only for helping understanding the background of the present invention and should not be construed as being included in the related art known by those skilled in the art.

From e.g. KR 101 611 085 B1 a cam carrier module for a vehicle for combination with a cylinder head is known, comprising a cam carrier having a fixing frame formed along camshafts at a center thereof and a plurality of journal portions formed at both sides from the fixing frame, a plurality of fastening bolts and gaskets disposed in sealing grooves on the bottom of the cam carrier. Further cam carrier modules are known from, e.g., DE 20 2015 106690 U1, DE 198 31 772 A1, US 2011/079192 A1 and DE 10 2005 028332 A1.

### SUMMARY OF THE INVENTION

Accordingly, the present invention has been made keeping in mind the above problems occurring in the related art, and the present invention is intended to propose a cam carrier module for a vehicle that prevents deformation of a journal portion by improving a structure for combining a cam carrier and a cylinder head and improves sealing ability by improving a sealing structure.

The present invention provides a cam carrier module for a vehicle according to claim 1. Further embodiments are described in the dependent claims.

Edge portions may be formed at the edges of the cam carrier, the bridges may be formed between the edge portions and the journal portions, and ribs may be formed on tops and bottoms of the bridges to reinforce the bridges.

The bottom of the fixing frame is in close contact with the cylinder head, second fastening bolt holes for the second fastening bolts are formed through the fixing frame, sealing grooves are formed around the fastening bolt holes on the bottom of the fixing frame, and gaskets are disposed in the sealing grooves to seal a portion between the bottom of the cam carrier and the cylinder head.

The gaskets may protrude outward from the sealing grooves in close contact with the cylinder head.

First oil channels are formed in the cylinder head and each have a first end connected to a main gallery in the cylinder head and a second end connected to the top of the cylinder head, and second oil channels are formed in the cam carrier and each have a first end connected to the second end of the first oil channel and a second end connected to the inner side of a journal of the journal portion.

Oil grooves are formed on the bottom of the cam carrier, and the second ends of the first oil channels and the first ends of the second oil channels are connected to the oil grooves so that oil flows.

The oil grooves are formed to partially surround the sealing grooves around the fastening bolt holes.

The second oil channels are formed to face each other with the fastening bolt holes therebetween.

According to the present invention, since fastening bolts are tightened in the fixing frame between journal portions at both sides, bores are not deformed even though fastening bolts are tightened. Accordingly, the possibility of deformation of the bores is precluded, so the oil gap from the inner sides of the bores is normally maintained when camshafts are fitted, thereby achieving smooth rotation of the camshafts.

Further, since the oil channels are formed at the lower ends of the fastening bolt holes, it is advantageous for generating surface pressure, oil leakage is prevented, and sealing ability is improved. Further, since the second oil channels connected to the intake journal portion and the exhaust journal portion have the same length, oil can be supplied in the same amount at the same speed to the journal portions.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view illustrating the assembly of a cylinder head and a cam carrier according to the present invention;
FIG. 2 is a view showing the bottom of the cam carrier for a vehicle according to the present invention;
FIG. 3 is a view illustrating a sealing groove and an oil groove formed on the bottom of the cam carrier for a vehicle according to the present invention;
FIG. 4 is a view illustrating ribs formed on the cam carrier according to the present invention; and
FIG. 5 is a view illustrating the connection relationship between an oil groove and an oil channel for the flow of oil in the present invention.

### DETAILED DESCRIPTION OF THE INVENTION

Exemplary embodiments of the present invention will be described hereafter in detail with reference to the accompanying drawings.

A cam carrier module for a vehicle of the present invention includes largely a cam carrier 100, journal portions 130, and fastening bolts.

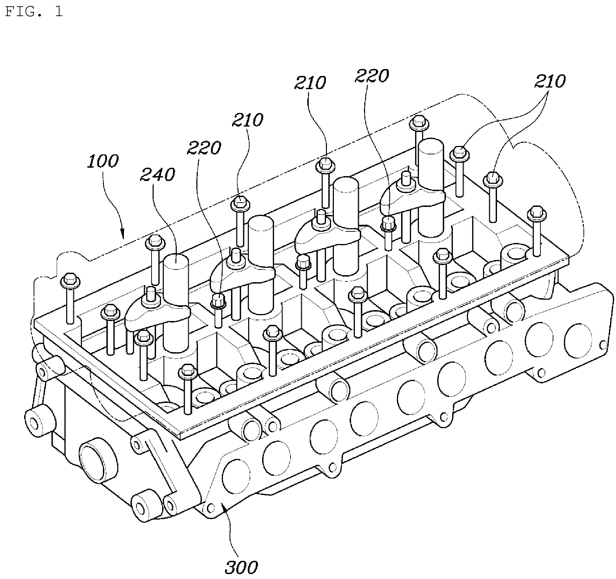

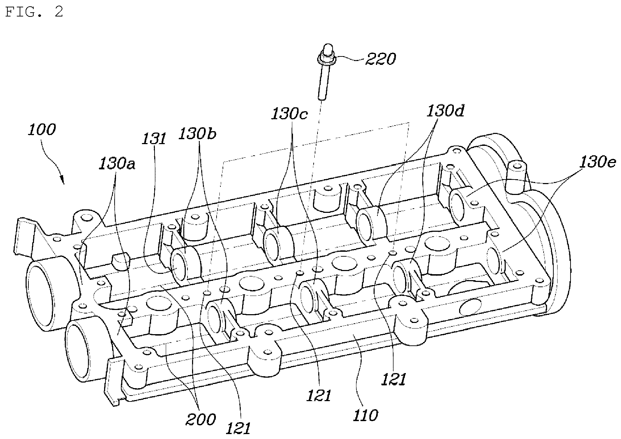

Referring to FIGS. 1 and 2, first, the cam carrier 100 is disposed between a cylinder head 300 and a cylinder head cover to longitudinally mount camshafts 200 and the bottom of the cam carrier 100 may be coupled to the top of the cylinder head 300.

A fixing frame 120 is formed along the camshafts 200 at the center of the cam carrier 100 and injectors 240 may be disposed on the fixing frame 120. For example, the injectors 240 may be disposed through the cam carrier 100 and the cylinder head 300, in which fuel can be directly injected into combustion chambers in cylinders from the injectors 240.

The journal portions 130 are arranged along the camshafts 200 and circular bores 131 may be formed at both sides from the fixing frame 120 so that an intake camshaft 200 and an exhaust camshaft 200 are inserted and supported therein, respectively. The bores 131 may be integrally formed with the journal portions 130 and the journal portions 130 may be integrally formed with edges 110 to be described below and the fixing frame 120, so the cam carrier 100 may be formed in a single unit.

The fastening bolts, which are tightened to the cylinder head 300 through the cam carrier 100, are classified into first fastening bolts 210 and second fastening bolts 220.

The first fastening bolts 210 are disposed at the portions connected from the journal portions 130 to the edges of the cam carrier 100.

For example, when first to five journal portions 130a to 130e are arranged along the fixing frame 120, the first fastening bolts 210 are disposed at the portions connected from the first to five journal portions 130a to 130e to the edges of the cam carrier 100.

On the other hand, the second fastening bolts 220 are disposed between the journal portions 130 at the center of the cam carrier 100.

For example, the second fastening bolts 220 may be disposed respectively between the second, third, and fourth journal portions 130b, 130c, and 130d on the fixing frame 120.

That is, as the center portion of the cam carrier 100 that is less brittle than the edges of the cam carrier 100, when the fastening bolts are tightened in the journal portions 130 closer to the bores 131, the bores 131 may be deformed by the force for tightening the fastening bolts. Accordingly, even if fastening bolts are tightened, it is possible in the present invention to prevent deformation of the bores 131 by tightening the fastening bolts in the fixing frame 120 between the journal portions 130 farther from the bores 131.

Accordingly, the possibility of deformation of the bores 131 is precluded, so the oil gap from the inner sides of the bores 131 when the camshafts 200 are combined is normally maintained, and accordingly, the camshafts 200 can smoothly rotate.

Further, in the present invention, the first journal portions 130a and the fifth journal portions 130e at both ends of the fixing frame 120 are formed at the edges of the cam carrier 100, so a plurality of first fastening bolts 210 are disposed between the first journal portions 130a and between the fifth journal portions 130e.

That is, the edges of the cam carrier 100 are relatively high in brittleness, so the possibility of deformation of the bores 131 is not large even though the fastening bolts are disposed at the journal portions 130a close to the bores 131. Therefore, the cam carrier 100 and the cylinder head 300 are strongly combined by a plurality of first fastening bolts 210, so sealing ability is improved and the possibility of deformation of the bores 131 is reduced.

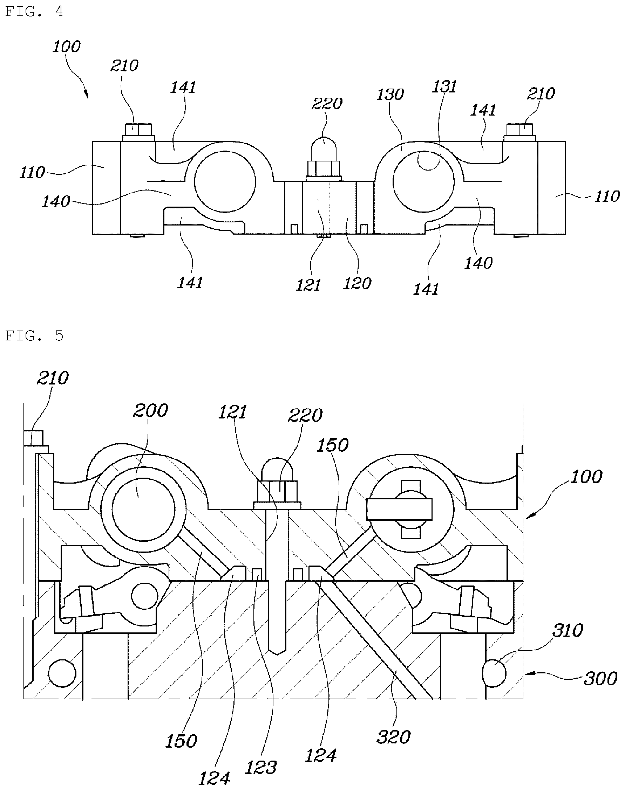

Referring to FIG. 4, in the present invention, edge portions 110 may be formed at the edges of the cam carrier, bridges 140 may be formed between the edge portions 110 and the journal portions 130, and ribs 141 may be formed on the tops and the bottoms of the bridges 140 to reinforce the bridges 140.

That is, the strength of the bridges 140 can be increased by the ribs 141, and accordingly, it is possible to maintain the sealing ability between the cylinder head 300 and the cam carrier 100 by tightening only one fastening bolt in the fixing frame 120.

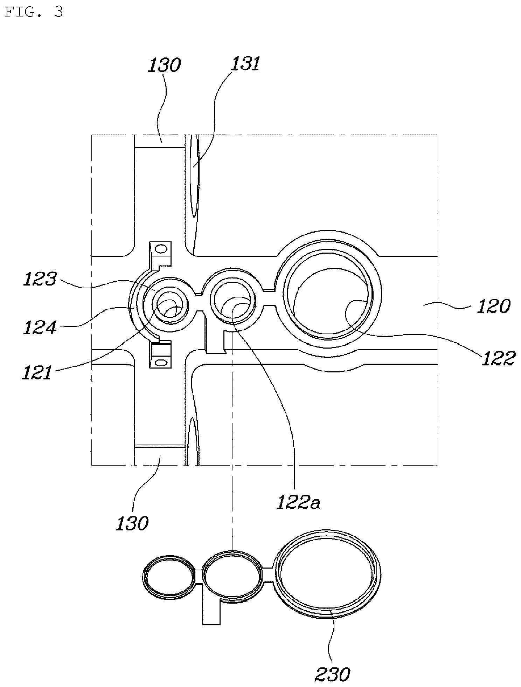

Referring to FIGS. 3 and 5, the bottom of the fixing frame 120 may be in close contact with the top of the cylinder head 300 and fastening bolt holes 121 for the second fastening bolts 220 are may formed in the fixing frame 120. Sealing grooves 123 are formed around the fastening bolt holes 121 through the bottom of the fixing frame 120 and gaskets 230 are disposed in the sealing grooves 123 to seal the portion between the bottom of the cam carrier 100 and the cylinder head 300.

For example, a plurality of injector holes 122 is formed along the fixing frame 120 and injectors 240 are inserted in the injector holes 122. The injector holes 122 are formed for each cylinder, so the injectors 240 can be individually provided for each cylinder.

An injector bracket hole 122a is formed at a side of each of the injector holes 122, so injector brackets may be inserted in the injector bracket holes 122a. Further, a fastening bolt hole 121 may be formed at a side of each of the injector bracket holes 122a.

In particular, the sealing holes 123 that surround all of the fastening bolt holes 122, the injector bracket holes 122a, and the injector holes 122 and are connected to each other are formed through the bottom of the fixing frame 120 and gaskets 230 made of an elastic material such as rubber are disposed in the sealing grooves 123 to seal the portion between the cam carrier 100 and the cylinder head 300.

The gaskets 230 may have a shape corresponding to that of the sealing grooves 123.

That is, the interface between the cam carrier 100 and the cylinder head 300 is sealed by the gaskets 230, so it is possible to prevent air leaking from the injectors 240 from flowing into the engine.

Further, the gaskets 230 may protrude out of the sealing grooves 123 in contact with the cylinder head 300. That is, the gaskets 230 are thicker than the depth of the sealing grooves 123, so the gaskets 230 are in contact with the top of the cylinder head 300, and accordingly, the portion between the fixing frame 120 and the cylinder head 300 can be more strongly sealed.

On the other hand, referring to FIGS. 3 and 5, oil channels for oil flow are formed in the cylinder head 300 and the journal portions 130, so oil flows into the bores 131 and friction of the camshafts 200 inserted in the journal portions 130 is reduced.

For example, first oil channels 320 are formed in the cylinder head 300.

The first oil channel 320 has a first end connected to a main gallery 310 of the cylinder head 300 and a second end connected to second oil channels 150 to be described below through the top of the cylinder head 300.

The second oil channels 150 are formed in the cam carrier 100.

The second oil channel 150 has a first end connected to the second end of the first oil channel 320 and a second end connected to the inner side of the journal 131 of the journal portion 130, so the oil flowing through the first oil channel 320 and the second oil channel 150 is supplied to the inner side of the bore 131, thereby reducing the friction of the camshaft 200 inserted in the journal portions 130.

An oil groove 124 is formed at the joint of the second end of the first oil channel 320 and the first end of the second oil channel 150, on the bottom of the cam carrier 100.

That is, as the second end of the first oil channel 320 and the first end of the second oil channel 150 are connected so that oil flows to the oil groove 124, oil can flow from the first oil channel 320 to the second oil channel 150.

In particular, the oil holes 124 is formed to surround a portion of the sealing groove 123 around the fastening bolt hole 121. For example, the oil groove 124 may be formed in the shape of a semicircle, and the second end of the first oil channel 320 and the first end of the second oil channel 150 are connected to the first end and the second end of the oil groove 124, respectively.

That is, the oil channel 124 is formed at the lower ends of the fastening bolt hole 121, which is advantageous for generating surface pressure using the fastening pressure of the second fastening bolt 220, and is accordingly effective in preventing oil leakage from the oil groove 124.

Further, since the oil groove 124 is formed around the fastening bolt hole 121, the first oil channel 320 is directly connected to the oil channel 124, rather than through the fastening bolt hole 121, which contributes to improving purity of oil.

Further, the second oil channels 150 are formed to face each other with the fastening bolt hole 121 therebetween.

That is, as the oil groove 124 is formed in the shape of a semicircle around the fastening bolt hole 121, the second oil channels 150 extending from the oil channel 134 to the intake journal portion 130 and to the exhaust journal portion 130 have the same length. Therefore, oil can be supplied in the same amount at the same speed to the journal portions 130 from the oil channels 124.

That is, according to this configuration, the oil in the main gallery 310 flows through the first oil channels 320 in the cylinder head 300 and the oil flowing through the first oil channels 320 flows through the second oil channels 150 in the cam carrier 100 and is supplied to the inner sides (bores) of the journals 130. Therefore, the intake and exhaust camshafts 200 inserted in the journal portions 130 are more efficiently lubricated and friction is reduced, thereby improving fuel efficiency.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A cam carrier module for a vehicle for combination with a cylinder head (300), wherein first oil channels (320) are formed in the cylinder head (300) and each have a first end connected to a main gallery in the cylinder head (300) and a second end connected to the top of the cylinder head (300), the cam carrier module comprising:
a cam carrier (100) having a fixing frame (120) formed along camshafts (200) at a center thereof, a plurality of journal portions (130) formed at both sides from the fixing frame (120) to support the camshafts (200), and a plurality of fastening bolt holes including first fastening bolt holes and second fastening bolt holes (121), wherein the second fastening bolt holes (121) are formed through the fixing frame (120) at a middle portion of the cam carrier (100) and being disposed between the journal portions (130);
a plurality of fastening bolts including first fastening bolts (210) disposable at bridges (140) between the journal portions (130) and edges (110) of the cam carrier (100), and second fastening bolts (220) disposable between the journal portions (130) formed at the middle portion of the cam carrier (100) and in the second fastening bolt holes (121); and
gaskets (230) disposed in sealing grooves (123) formed around the second fastening bolt holes (121) on the bottom of the fixing frame (120),
wherein second oil channels (150) are formed in the cam carrier (100) and each have a first end connectable to the second end of the first oil channel (320) and a second end connected to an inner side of a journal (131) of the journal portion (130),
wherein, when the cam carrier module is combined with the cylinder head (300) using the plurality of fastening bolts to be tightened in the cylinder head (300) through the cam carrier (100) through the plurality of fastening bolt holes, the bottom of the fixing frame (120) is in close contact with the cylinder head (300),
wherein, when the cam carrier module is combined with the cylinder head (300), the gaskets (123) seal the portion between the bottom of the fixing frame (120) and the cylinder head (300) ,
wherein the second oil channels (150) are formed to face each other with the second fastening bolt holes (121) therebetween, the cam carrier module being **characterised in that** the second oil channels (150) have the same length,
wherein oil grooves (124) are formed on the bottom of the cam carrier (100), and when the cam carrier module is combined with the cylinder head (300), the second ends of the first oil channels (320) are connected to the oil grooves (124) and the first ends of the second oil channels (150) are connected to the oil grooves (124) so that oil flows, and
wherein the oil grooves (124) are formed to partially surround the sealing grooves (123) around the second fastening bolt holes (121).

2. The cam carrier module of claim 1, wherein edge portions (110) are formed at the edges of the cam carrier (100),
the bridges (140) are formed between the edge portions (110) and the journal portions (130), and
ribs (141) are formed on tops and bottoms of the bridges (140) to reinforce the bridges.

3. The cam carrier module of claim 1, wherein the gaskets (230) protrude outward from the sealing grooves (123) around the second fastening bolt holes (121) so the gaskets (230) are in contact with the top of the cylinder head (300) when the cam carrier module is combined with the cylinder head (300).

## Patentansprüche

1. Ein Nockenträgermodul für ein Fahrzeug zur Kombination mit einem Zylinderkopf (300), wobei erste Ölkanäle (320) in dem Zylinderkopf (300) ausgebildet sind und jeweils ein erstes Ende, das mit einem Hauptkanal in dem Zylinderkopf (300) verbunden ist, und ein zweites Ende haben, das mit der Oberseite des Zylinderkopfes (300) verbunden ist, wobei das Nockenträgermodul aufweist:
einen Nockenträger (100), der ein Befestigungsgestell (120), das entlang von Nockenwellen (200) in einer Mitte davon ausgebildet ist, eine Mehrzahl von Lagerabschnitten (130), die an beiden Seiten vom Befestigungsgestell (120) ausgebildet sind, um die Nockenwellen (200) zu stützen, und eine Mehrzahl von Befestigungsschraubenlöchern aufweist, die erste Befestigungsschraubenlöcher und zweite Befestigungsschraubenlöcher (121) aufweisen, wobei die zweiten Befestigungsschraubenlöcher (121) durch das Befestigungsgestell (120) hindurch an einem Mittelabschnitt des Nockenträgers (100) ausgebildet und zwischen den Lagerabschnitten (130) angeordnet sind,
eine Mehrzahl von Befestigungsschrauben, die erste Befestigungsschrauben (210), die an Brücken (140) zwischen den Lagerabschnitten (130) und Rändern (110) des Nockenträgers (100) angeordnet werden können, und zweite Befestigungsschrauben (220) aufweist, die zwischen den Lagerabschnitten (130), die am Mittelabschnitt des Nockenträgers (100) ausgebildet sind, und in den zweiten Befestigungsschraubenlöchern (121) angeordnet werden können, und
Dichtungen (230), die in Dichtungsnuten (123) angeordnet sind, die um die zweiten Befestigungsschraubenlöcher (121) am Boden des Befestigungsgestells (120) herum ausgebildet sind,
wobei zweite Ölkanäle (150) in dem Nockenträger (100) ausgebildet sind und jeweils ein erstes Ende, das mit dem zweiten Ende des ersten Ölkanals (320) verbindbar ist, und ein zweites Ende aufweisen, das mit einer Innenseite eines Lagers (131) des Lagerabschnitts (130) verbunden ist,
wobei, wenn das Nockenträgermodul mit dem Zylinderkopf (300) unter Verwendung der Mehrzahl von Befestigungsschrauben, die im Zylinderkopf (300) durch den Nockenträger (100) durch die Mehrzahl von Befestigungsschraubenlöchern anziehbar sind, kombiniert ist, der Boden des Befestigungsgestells (120) in engem Kontakt mit dem Zylinderkopf (300) steht,
wobei, wenn das Nockenträgermodul mit dem Zylinderkopf (300) kombiniert ist, die Dichtungen (123) den Abschnitt zwischen dem Boden des Befestigungsgestells (120) und dem Zylinderkopf (300) abdichten,
wobei die zweiten Ölkanäle (150) ausgebildet sind, um mit den zweiten Befestigungsschraubenlöchern (121) dazwischen einander zugewandt zu sein, das Nockenträgermodul **dadurch gekennzeichnet, dass** die zweiten Ölkanäle (150) die gleiche Länge haben,
wobei Ölnuten (124) am Boden des Nockenträgers (100) ausgebildet sind, und, wenn das Nockenträgermodul mit dem Zylinderkopf (300) kombiniert ist, die zweiten Enden der ersten Ölkanäle (320) mit den Ölnuten (124) verbunden sind und die ersten Enden der zweiten Ölkanäle (150) mit den Ölnuten (124) verbunden sind, so dass Öl fließt, und
wobei die Ölnuten (124) ausgebildet sind, um die Dichtungsnuten (123) um die zweiten Befestigungsschraubenlöcher (121) herum teilweise zu umgeben.

2. Das Nockenträgermodul gemäß Anspruch 1, wobei an den Rändern des Nockenträgers (100) Randabschnitte (110) ausgebildet sind,
die Brücken (140) zwischen den Randabschnitten (110) und den Lagerabschnitten (130) ausgebildet sind, und
auf den Brücken (140) oben und unten Rippen (141) ausgebildet sind, um die Brücken zu verstärken.

3. Das Nockenträgermodul gemäß Anspruch 1, wobei die Dichtungen (230) von den Dichtungsnuten (123) um die zweiten Befestigungsschraubenlöcher (121) herum nach außen vorstehen, so dass die Dichtungen (230) mit der Oberseite des Zylinderkopfes (300) in Kontakt sind, wenn das Nockenträgermodul mit dem Zylinderkopf (300) kombiniert ist.

## Revendications

1. Module support de came d'un véhicule, en association avec une culasse (300), où des premiers canaux d'huile (320) sont formés dans la culasse (300), chacun d'eux présentant une première extrémité connectée à une galerie principale dans la culasse (300), et une seconde extrémité connectée au dessus de la culasse (300), le module support de came comprenant :
un support de came (100) présentant un bâti de fixation (120) formé le long des arbres à cames (200) au centre, une pluralité de parties tourillons (130) formées des deux côtés à partir du bâti de fixation (120) destinées à supporter les arbres à cames (200), et une pluralité de trous de boulons de fixation comprenant des premiers trous de boulons de fixation et des seconds trous de boulons de fixation (121), où les seconds trous de boulons de fixation (121) sont formés à travers le bâti de fixation (120) au niveau d'une partie médiane du support de came (100), et sont disposés entre les parties tourillons (130) ;
une pluralité de boulons de fixation comprenant des premiers boulons de fixation (210) pouvant être agencés au niveau de ponts (140) entre les parties tourillons (130) et les bords (110) du support de came (100), et des seconds boulons de fixation (220) pouvant être agencés entre les parties tourillons (130) formées au niveau de la partie médiane du support de came (100) et dans les seconds trous de boulons de fixation (121) ; et
des joints d'étanchéité (230) disposés dans des rainures d'étanchéité (123) formées autour des seconds trous de boulons de fixation (121) sur le bas du bâti de fixation (120),
où des seconds canaux d'huile (150) sont formés dans le support de came (100), chacun d'eux présentant une première extrémité pouvant être connectée à la seconde extrémité du premier canal d'huile (320), et une seconde extrémité connectée à un côté intérieur d'un tourillon (131) de la partie tourillon (130),
où, lorsque le module support de came est associé à la culasse (300) en utilisant la pluralité de boulons de fixation à serrer dans la culasse (300) à travers le support de came (100) à travers la pluralité de trous de boulons de fixation, le bas du bâti de fixation (120) est en contact étroit avec la culasse (300),
où, lorsque le module support de came est associé à la culasse (300), les joints d'étanchéité (123) scellent la partie entre le bas du bâti de fixation (120) et la culasse (300),
où les seconds canaux d'huile (150) sont formés afin de se faire face les uns aux autres, les seconds trous de boulons de fixation (121) se situant entre eux, le module support de came étant **caractérisé en ce que** les seconds canaux d'huile (150) présentent la même longueur,
où des rainures d'huile (124) sont formées sur le bas du support de came (100), et lorsque le module support de came est associé à la culasse (300), les secondes extrémités des premiers canaux d'huile (320) sont connectées aux rainures d'huile (124), et les premières extrémités des seconds canaux d'huile (150) sont connectées aux rainures d'huile (124) de telle sorte que l'huile circule, et
où les rainures d'huile (124) sont formées afin d'entourer partiellement les rainures d'étanchéité (123) autour des seconds trous de boulons de fixation (121).

2. Module support de came selon la revendication 1, où
des parties bords (110) sont formées au niveau des bords du support de came (100),
des ponts (140) sont formés entre les parties bords (110) et les parties tourillons (130), et
des nervures (141) sont formées en haut et en bas des ponts (140) afin de renforcer les ponts.

3. Module support de came de la revendication 1, où les joints d'étanchéité (230) font saillie vers l'extérieur à partir des rainures d'étanchéité (123) autour des seconds trous de boulons de fixation (121), de telle sorte que les joints d'étanchéité (230) soient en contact avec le dessus de la culasse (300) lorsque le module support de came est associé à la culasse (300).
